# EUROPÄISCHE PATENTSCHRIFT

(11) **EP 3 504 110 B1**
(45) Veröffentlichungstag und Bekanntmachung des Hinweises auf die Patenterteilung: **17.01.2024**
(21) Anmeldenummer: 17768359.6
(22) Anmeldetag: 24.08.2017
(51) Int. Cl.: B62D 21/15, B62D 25/20, B60K 1/04

(54) **KAROSSERIE FÜR EINEN PERSONENKRAFTWAGEN**
BODY FOR A PASSENGER CAR
CARROSSERIE POUR VÉHICULE DE TOURISME

(30) Priorität: 27.08.2016 DE 102016010353
(43) Veröffentlichungstag der Anmeldung: 03.07.2019
(73) Patentinhaber: Mercedes-Benz Group AG, 70372 Stuttgart (DE)
(72) Erfinder: WIRSING, Michael, 75391 Gechingen (DE); HILDEBRAND, Matthias, 71034 Dagersheim (DE); FREUND, Andreas, 72218 Wildberg (DE); GERE, Peter, 73277 Owen (DE); AKTAY, Levent, 70771 Leinfelden-Echterdingen (DE); OPELKA, Jan-Mark, 73630 Remshalden (DE); KUEMMERLEN, Peter, 70435 Stuttgart (DE); KALLFASS, Dietmar, 72119 Ammerbuch (DE); SPREMBERG, Jens, 73079 Süßen (DE); ZIMMERMANN, Joerg, 75365 Calw (DE); EDELE, Dieter, 70499 stuttgart (DE); DINGFELDER, Steffen, 71069 Sindelfingen (DE); MEHRHOLZ, Ralf, 71229 Leonberg (DE); HIRZEL, Marcus, 70565 Stuttgart (DE); OEHM, Bianca, 70619 Stuttgart (DE); HERTFELDER, Marie-Louise, Steinenbronn (DE)
(74) Vertreter: Novagraaf Group
(86) Internationale Anmeldenummer: PCT/EP2017/001009
(87) Internationale Veröffentlichungsnummer: WO 2018/041396

(56) Entgegenhaltungen:
- JP-A- 2008 230 460
- JP-A- 2010 195 257
- JP-A- 2010 241 393
- US-A1- 2009 001 767

## Beschreibung

Die Erfindung betrifft eine Karosserie für einen Personenkraftwagen, gemäß Oberbegriff des Anspruchs 1.

Beispielsweise wenn bei Personenkraftwagen Hochvoltbatterien für entsprechende elektrische Antriebe des Fahrzeugs mitgeführt werden, aber auch in anderen Anwendungsbereichen, ist ein entsprechender Schutz jeweiliger Bauräume beziehungsweise Bauteile innerhalb der Personenkraftwagenkarosserie von großer Bedeutung. Gerade bei derartigen Hochvoltbatterien besteht bei Kollisionen des Personenkraftwagens die Gefahr erheblicher Beschädigungen und damit einhergehender nachteiliger Effekte, beispielsweise thermischer oder toxischer Gefährdungen.

Um derartige Beschädigungen von Hochvoltbatterien zu vermeiden, sind bereits diverse Maßnahmen bekannt. So ist es beispielsweise bereits bekannt, entsprechende Panzerungen von derartigen Energiespeichern vorzunehmen beziehungsweise diese außerhalb der Hauptdeformationszone anzuordnen. Allerdings bedingt dies in den allermeisten Fällen den Einsatz von kleineren Energiespeichern, die wiederum Energie für eine nur geringere Reichweite des Fahrzeugs zur Verfügung stellen können, beziehungsweise eine Verknappung des nutzbaren Bauraums für die Batterien.

Aus der EP 0 968 904 A2 geht ein Personenkraftwagen hervor, bei dem im Heckbereich eine zwischen seitlichen Hauptlängsträgern angeordnete Stützanordnung vorgesehen ist, welche bei einem Heckanprall einen zusätzlichen Lastpfad in Fahrzeuglängsrichtung nach vorne bis zu einem mit den Hauptlängsträgern verbundenen Querträger ausbildet, so dass bei einem versetzten, anfänglich nur einen Hauptlängsträger beaufschlagenden Heckaufprall die Aufprallkräfte auch auf den anderen Hauptlängsträger übertragen und teilweise von der Stützanordnung aufgenommen werden. Mittels dieser Stützanordnung ergibt sich eine reduzierte aber kontinuierliche Deformation des Heckbereichs des Personenkraftwagens, so dass bei einer vorhandenen dritten Sitzreihe ein ausreichender Fußraum aufrechterhalten wird.

Aus der gattungsbildenden JP 2010 241393 A geht eine Karosserie für einen Personenkraftwagen hervor, bei der im Heckwagenbereich ein zwischen hinteren Längsträgern angeordnetes, sich in Kraftwagenlängsrichtung erstreckendes, durchgängig steif ausgebildetes Längsträgerelement angeordnet ist, unterhalb dessen ein Reserverad angeordnet ist. Das Längsträgerelement dient dazu, bei einer Heckkollision einen zusätzlichen Lastpfad zwischen einem heckseitigen Stoßfängerquerträger und einem Mitteltunnel des Kraftwagens auszubilden, wobei das Längsträgerelement so steif ausgeführt ist, dass es nicht kollabiert und der Lastpfad aufrechterhalten bleibt.

Aufgabe der vorliegenden Erfindung ist es, eine Karosserie der hier angesprochenen Art zu schaffen, bei welcher im Falle einer Heckkollision eine verbesserte Energieabsorption bei gleichzeitiger Gewährleistung des Schutzes der Fahrgastzelle realisierbar ist.

Diese Aufgabe wird erfindungsgemäß durch eine Karosserie mit den Merkmalen des Anspruchs 1 gelöst. Vorteilhafte Ausgestaltungen mit zweckmäßigen Weiterbildungen der Erfindung sind Gegenstand der abhängigen Ansprüche.

Die erfindungsgemäße Karosserie weist zwei, sich bis in einen Hinterwagenbereich erstreckende Hauptlängsträger auf, die über wenigstens einen Stoßfängerquerträger miteinander verbunden sind, und eine sich zwischen den beiden Hauptlängsträgern erstreckende Stützanordnung auf, welche bei einer kollisionsbedingten Kraftbeaufschlagung zur Ausbildung eines zusätzlichen Lastpfads L an einem in einer Schutzzone S der Personenkraftwagenkarosserie vorgesehenen Mitteltunnel abgestützt ist. Oberhalb und/oder unterhalb der Stützanordnung ist ein Bauraumbereich zur Unterbringung wenigstens eines schutzbedürftigen Bauteils oder Aggregats vorgesehen, wobei die Stützanordnung eine im Bereich der Fahrzeugmitte zwischen den Hauptlängsträgern erstreckende Strebe umfasst, welche als eine bei einer kollisionsbedingten Kraftbeaufschlagung die Anprallkräfte nach vorne zum Mitteltunnel durch- beziehungsweise weiterleitende Schutzeinrichtung ausgebildet ist, Erfindungsgemäß ist vorgesehen, dass die Strebe einen ersten, bei einem Anprall eines Kollisionspartners gezielt energieabsorbierend deformierbaren Längsabschnitt und einen zweiten, beim Anprall eines Kollisionspartners sich als starrer Balken verhaltenden, die Anprallkräfte durch- beziehungsweise weiterleitenden Längsabschnitt aufweist.

Mittels der Stützanordnung ist eine derartige Abstützung an der zur Fahrzeugmitte hin dahinterliegenden Schutzzone geschaffen, dass ein zusätzlicher Lastpfad zwischen einem an einem äußeren Ende der Deformationszone angeordneten äußeren Stützelement, beispielsweise einem entsprechenden Biegequerträger oder dergleichen, gegeben ist. Durch diese Abstützung ergibt sich eine deutliche Entlastung der jeweiligen Hauptlängsträger der Personenkraftwagenkarosserie insbesondere im Bereich der Deformationszone und auch im Bereich der Schutzzone, und somit ein Erhalt der Strukturintegrität der Personenkraftwagenkarosserie in diesem Bereich durch gezielte Deformation im Hauptdeformationsbereich, nämlich im Bereich der Deformationszone, wodurch ebenso ein erhöhter Insassenschutz gewährleistet werden kann.

Festzuhalten bleibt, dass die erfindungsgemäße Strebe einen quasi als Energieabsorptionselement, welches auch als Crashbox bezeichnet wird, wirkenden Längsabschnitt aufweist. Dieser ist vorzugsweise an einem Ende der Strebe ausgebildet oder vorgesehen, vorzugsweise an dem dem Kollisionspartner zugewandten Strebenende. Denkbar ist jedoch auch, dass dieser erste Längsabschnitt auch in einem mittleren Längenabschnitt der Strebe ausgebildet oder angeordnet ist. Dieser erste Längsabschnitt verformt sich bei Überschreiten eingeleiteter, kollisionsbedingter Aufprallkräfte unter Verkürzung seiner Länge, wobei die Verformung dieses Längsabschnitt durch entsprechende Maßnahmen, beispielsweise mittels gezielter Schwächungen, beispielsweise Sicken, Materialdickenunterschiede, Durchbrüche und dergleichen kontrolliert erfolgt. Die Energieaufnahme der Karosserie bei einem Heckanprall ist damit nochmal deutlich verbessert, wodurch auch die auf die sich innerhalb der Schutzzone, welche auch eine Fahrgastzelle mit umfasst, aufhaltenden Insassen wirkenden Belastungen reduziert sind. Der starre, zweite Längsabschnitt hält erfindungsgemäß den Anprallkräften stand und kollabiert daher nicht.

Durch die erfindungsgemäßen Maßnahmen werden bei einem Heckanprall die eingeleiteten Anprallkräfte durch die Karosserie eben nicht gleichmäßig und kontinuierlich energieabsorbierend abgebaut, sondern mittels der Stützanordnung wird zumindest der Fahrzeuglängenbereich, in dem sich der zu schützende Bauraumbereich befindet, überbrückt, so dass hier keine ein in diesem Bauraumbereich befindliches Bauteil oder Aggregat möglicherweise beschädigende Deformation stattfindet. Mittels der erfindungsgemäßen Stützanordnung wird die Strukturintegrität der Karosserie im Bereich beziehungsweise -in Fahrzeuglängsrichtung betrachtet- auch auf Höhe dieses Bauraumbereichs gewährleistet und auch die innerhalb der Schutzzone (S). Durch die Schaffung eines zusätzlichen Lastpfades ergibt sich eine deutliche Verringerung der Lasten auf diesen speziellen Bauraum innerhalb der Personenkraftwagenkarosserie, welcher beispielsweise zur Unterbringung einer Hochvoltbatterie genutzt werden kann und welcher sich oberhalb oder zusätzlich oder alternativ auch unterhalb des mittels der Stützanordnung geschaffenen, zusätzlichen zentralen Lastpfads befindet. Es ist jedoch klar, dass anstelle der Unterbringung einer Hochvoltbatterie dieser Bauraum auch zur Nutzung anderer Bauteile oder Aggregate, beispielsweise entsprechender Kraftstofftanks oder dergleichen, genutzt werden kann. Außerdem können auch andere, besonders schutzbedürftige Bauteile oder Aggregate durch diese Schutzeinrichtung zuverlässig geschützt werden. Der zu schützende Bauraumbereich ist im Allgemeinen kein allseitig geschlossener Raum oder eine Kammer oder dergleichen, sondern lediglich ein Ort beziehungsweise Bereich zur Unterbringung beziehungsweise Anordnung des zu schützenden Bauteils/Aggregats.

Ein weiterer Vorteil der Erfindung besteht darin, dass beispielsweise ein Ecktyp, also eine einfache Form der Personenkraftwagenkarosserie ohne diese Stützanordnung, hergestellt werden und dann auf einfache Weise durch die erfindungsgemäße Stützanordnung ergänzt werden kann, um entsprechende Bauräume innerhalb der Personenkraftwagenkarosserie besonders zu schützen. Durch diese spezielle Verwendbarkeit beziehungsweise Nachrüstbarkeit der Stützanordnung kann somit ein Ecktyp der Karosserie geschaffen werden, der bezüglich Kosten und Gewicht optimiert ist.

Grundsätzlich ist es möglich, dass die Strebe einstückig ausgebildet ist. Möglich ist auch, diese Strebe aus mindestens zwei Einzelteilen, die vorzugsweise jeweils einen der beiden Längsabschnitte bilden, zusammengesetzt sind.

Bevorzugt wird auch ein Ausführungsbeispiel der Karosserie, bei dem zumindest der erste Längsabschnitt der Strebe im Bereich einer Deformationszone (D) angeordnet ist. Deformationszone ist der Bereich der heckwagenseitigen Karosseriestruktur, welcher zur crashbedingten Energieabsorption vorgesehen ist beziehungsweise in dessen Bereich diese Verformung standfinden soll.

Weiterhin wird ein Ausführungsbeispiel der Karosserie, bei dem die Stützanordnung und im Bereich der Schutzzone ein Plattenelement und/oder mindestens eine Strebe umfasst, welches beziehungsweise welche so starr und steif ausgebildet sind/ist, dass es bei einer kollisionsbedingten Kraftbeaufschlagung den Anprallkräften standhält und diese zum Mitteltunnel weiterleitet. Es findet sich also auch in diesem Teil des zusätzlichen Lastpfades quasi eine Überbrückung der Kollisionskräfte zur Vermeidung von Deformationen in diesen Bereich, auch oberhalb und unterhalb des Lastpfades, statt.

Nach einer Weiterbildung ist vorgesehen, dass die Stützanordnung zumindest im Wesentlichen im Bereich der Deformationszone ein Stützelement und im Bereich der Schutzzone ein Plattenelement und/oder mindestens eine Strebe, vorzugsweise mehrere, gegebenenfalls in Querrichtung des Kraftwagens in einem Abstand voneinander angeordnete Streben umfasst. Durch die entsprechende Ausgestaltung der Stützanordnung im Bereich der Deformationszone beziehungsweise im Bereich der Schutzzone kann somit das Kraftübertragungs- und Deformationsverhalten der Stützanordnung im Falle einer unfallbedingten Krafteinleitung eingestellt werden.

Eine weitere vorteilhafte Ausführungsform sieht vor, dass die Stützanordnung jeweilige Krafteinleitungselemente aufweist, über welche eine Unfallkraft in einen Heckboden-unter-Fondsitz, in einen Querträger und/oder den im Bereich eines Hauptbodens vorgesehenen Mitteltunnel einleitbar ist. Durch die jeweiligen Krafteinleitungselemente wird somit eine optimale Krafteinleitung in den Mitteltunnel der Personenkraftwagenkarosserie ermöglicht.

Bei einem vorteilhaften Ausführungsbeispiel der Karosserie ist ein U-förmiges Stützelement vorgesehen, welches im Bereich eines hinteren Strukturelements am äußeren Ende der Deformationszone sowie im Bereich der jeweiligen Hauptlängsträger verläuft und -in Fahrzeuglängsrichtung gesehen- zumindest abschnittsweise in Überdeckung mit dem oberhalb des Lastpfades angeordneten Bauraumbereich zur Aufnahme des wenigstens einen schutzbedürftigen Bauteils oder Aggregats angeordnet ist. Dieses bügelförmige Stützelement ist vorzugsweise starr und steif, um eine Intrusion beziehungsweise ein das darin befindliche und zu schützende Bauteil/Aggregat möglicherweise beschädigende Intrusion auf Höhe des zu schützenden Bauraumbereichs zu vermeiden. Das sich innerhalb der Karosserie befindliche beziehungsweise in diese integrierte und von außen nicht zu sehende Stützelement weist - vorzugsweise analog einem auch als Kuhfänger bezeichneten Frontschutzbügel - die Funktion eines Rammschutzes bei einem Heckwagenanprall auf.

Nach einer Weiterbildung der Karosserie ist vorgesehen, dass das U-förmige Stützelement ein auf Höhe und in Überdeckung mit dem Bauraumbereich angeordnetes Querelement und im Bereich der Hauptlängsträger verlaufende und an dem jeweiligen Hauptlängsträger angebundene Schenkel aufweist. Über diese Art der Anbindung des Stützelements an die übrige Karosserie werden beim Heckanprall die auf das Stützelement wirkenden Anprallkräfte ebenfalls in die Hauptlängsträger einbeziehungsweise weitergeleitet. Auf aufwendige, zusätzliche Abstützstrukturen zur Anbindung des U-förmigen Stützelements kann daher verzichtet werden.

Dabei ist das Querelement -in Fahrzeuglängsrichtung gesehen- auf Höhe eines eine Ladekante für einen Kofferraum bildenden Querträgers angeordnet. Wird dieser Querträger bei einem Heckanprall kraftbeaufschlagt, wird eine Intrusion, insbesondere ein Abkippen desselben in den Innenraum durch das Querelement verhindert, welches den Querträger abstützt. Bei einer bevorzugten Ausführungsform der Karosserie ist vorgesehen, dass das Querelement und der im Bereich der Ladekante angeordnete Querträger miteinander verbunden sind.

Weitere Vorteile und Einzelheiten der Erfindung ergeben sich aus der nachfolgenden Beschreibung eines bevorzugten Ausführungsbeispiels sowie anhand der Zeichnung. Dabei zeigen:

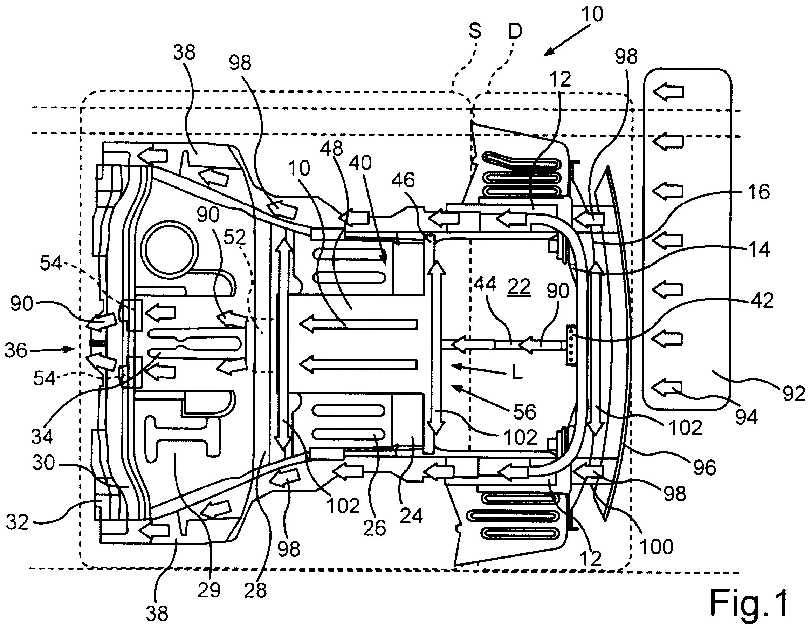

- Fig. 1: eine ausschnittsweise Draufsicht auf einen Hinterwagenbereich eines Ausführungsbeispiels der erfindungsgemäßen Personenkraftwagenkarosserie, mit einer Schutzeinrichtung gemäß einer ersten Ausführungsform, welche eine Stützanordnung mit wenigstens einem am äußern Ende einer hinteren Deformationszone der Personenkraftwagenkarosserie angeordneten äußeren Stützelement umfasst, welches über eine, einen zusätzlichen Lastpfad ausbildende Stützstruktur zur Abstützung an wenigstens einem in einer Schutzzone der Personenkraftwagenkarosserie angeordneten Karosseriestrukturteil in Form eines Mitteltunnelstrukturteils abgestützt ist, wobei der Kraftverlauf bei einer unfallbedingten Kraftbeaufschlagung mit einer Barriere erkennbar ist;
- Fig. 2: eine ausschnittsweise Perspektivansicht auf die Personenkraftwagenkarosserie im Hinterwagenbereich mit der Schutzeinrichtung analog zu Fig. 1;
- Fig. 3: eine perspektivische Explosionsdarstellung der wesentlichen Bauteile der Schutzeinrichtung gemäß den Fig. 1 und 2;
- Fig. 4: eine perspektivische Darstellung eines Ausführungsbeispiels einer zentralen Strebe;
- Fig. 5: einen ausschnittsweisen Längsschnitts durch den Heckwagenbereich gemäß der Figuren 1 und 2 auf Höhe Y=0, also in Richtung der Längsmittelachse des Personenkraftwagens und
- Fig. 6: einen gegenüber Figur 5 vergrößerten Ausschnitt durch den Heckwagenbereich gemäß den Figuren 1 und 2 auf Höhe Y=0, mit einer oberhalb der zentralen Strebe angeordneten Energiespeicheranordnung zur Versorgung eines Antriebsaggregats.

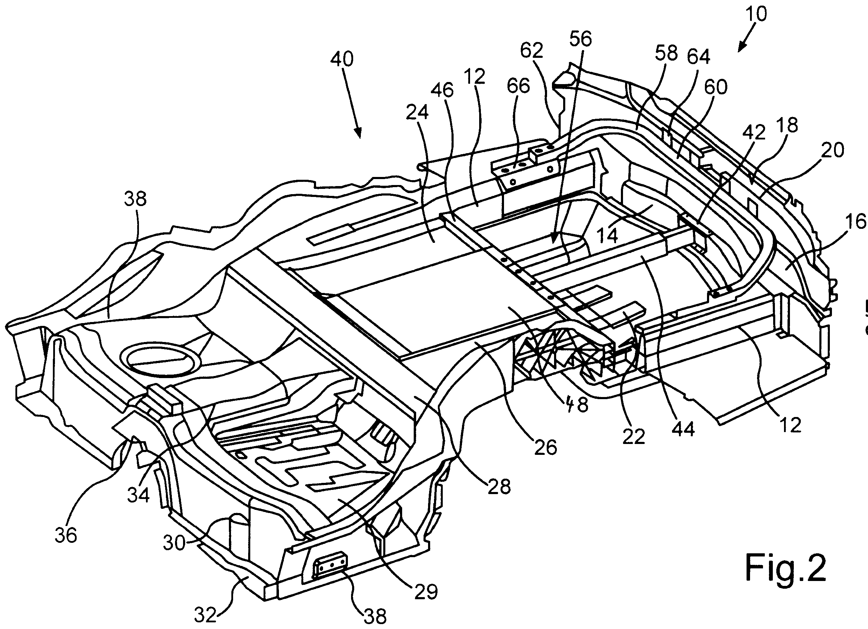

In den Figuren 1 und 2 ist in einer ausschnittsweisen Draufsicht ein Hinterwagenbereich 10 einer Personenkraftwagenkarosserie dargestellt. Als wesentliche Strukturbauteile der Personenkraftwagenkarosserie sind dabei zunächst zwei, seitlich angeordnete Hauptlängsträger 12 erkennbar, welche über einen hinteren Querträger 14 einer hinteren Abschlusswand 16 miteinander verbunden sind. Im mittleren Bereich endet diese Abschlusswand 16 an einem eine Ladekante 18 für einen Kofferraum bildenden Querträger 20.

Zwischen den beiden Hauptlängsträgern 12 erstreckt sich ein allgemein als Ersatzradmulde 22 bezeichneter Aufnahmeraum, welche beispielsweise als Unterbringungsraum für -sofern vorgesehen- ein Ersatzrad oder alternativ für Aggregate, Ladegut oder dergleichen dient. Diese Ersatzradmulde 22 erstreckt sich -in Vorwärtsfahrtrichtung des Kraftwagens gesehen- nach vorne hin bis zu einem Querträger 24, welcher die beiden Hauptlängsträger 12 miteinander verbindet und nach hinten hin einen hinteren Heckboden 26 begrenzt. Dieser Heckboden 26 erstreckt sich nach vorne hin bis zu einem weiteren Querträger 28, welcher ebenfalls die beiden Hauptlängsträger 12 miteinander verbindet und einen vorderen Heckboden 29, welcher im Folgenden als "Heckboden-unter-Fondsitz" bezeichnet wird, nach hinten hin begrenzt. Der vordere Heckboden-unter-Fondsitz 29 erstreckt sich nach vorne hin bis zu einem Querträger 30, welcher seinerseits einen nicht dargestellten Hauptboden, welcher sich zumindest im Wesentlichen auf Höhe jeweiliger Flansche 32 erstreckt, nach hinten hin begrenzt. An dem Querträger 30 kann beispielsweise ein Fondsitz befestigt sein.

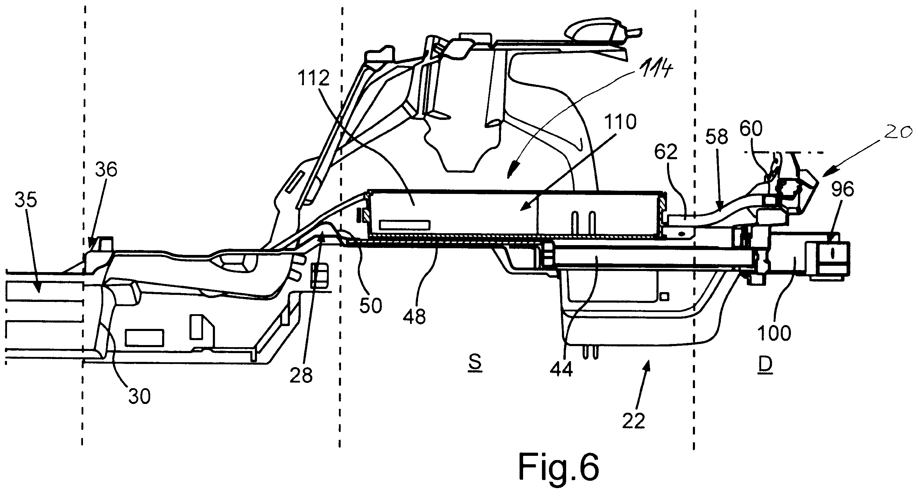

Der Heckboden-unter-Fondsitz 29 ist in seinem mittleren Bereich mit einer nach oben über seine Hauptebene hervorstehenden Verstärkung 34 versehen, welche beispielsweise in den Heckboden-unter-Fondsitz 29 eingeformt ist. Diese Verstärkung erstreckt sich ausgehend vom Querträger 28 in der Fahrzeugmitte in Fahrzeuglängsrichtung nach vorne bis zu einer Flanschanordnung 36 im Bereich des Querträgers 28, an welcher ein am Hauptboden ausgebildeter oder daran vorgesehener, lediglich in Fig. 6 teilweise dargestellter, fahrzeugmittig verlaufender Mitteltunnel 35 angesetzt und befestigt wird. Der hier im Wesentlichen U-förmige beziehungsweise bogenförmige Mitteltunnel 35, welcher zumindest bereichsweise nach unten in Richtung zur Fahrbahn hin offen ausgestaltet ist, erstreckt sich nach vorne hin bis zu einer nicht erkennbaren vorderen Stirnwand und kann durchgängig einstückig beziehungsweise einteilig ausgebildet oder aber aus mehreren Mitteltunnelstrukturteilen zusammengesetzt sein.

Bei einem in den Figuren nicht dargestellten Ausführungsbeispiel der Karosserie ist der Mitteltunnel auf den Hauptboden aufgesetzt und durch diesen verschlossen. Hierdurch ergibt sich ein geschlossenes, besonders stabiles und steifes Hohlprofil im Mittenbereich des Kraftwagens. Der vorzugsweise durchgängig so geschlossene Hauptboden ermöglicht eine unter Aerodynamikgesichtspunkten verbesserte Luftströmung im Unterbodenbereich des Kraftwagens im Fahrbetrieb.

Der Mitteltunnel 35 ist mit dem Fahrzeugboden verbunden und erstreckt sich zumindest größtenteils in Fahrzeuglängsrichtung (x-Richtung) im Bereich eines auch als Fahrgastzelle bezeichneten Fahrgastraums. Der Mitteltunnel ist also Teil der selbstragenden Rohbaukarosserie und kann beispielsweise zur Aufnahme einer Kardanwelle, Kühlwasserleitungen oder Abgasleitungen dienen.

Der Hauptboden wird durch jeweilige Seitenschweller 38 begrenzt, welche im Bereich des vorderen Heckbodens 29 beziehungsweise etwa auf Höhe des Querträgers 28 in die hinteren Hauptlängsträger 12 übergehen. Die hinteren Hauptlängsträger 12 begrenzen demzufolge im Bereich des Querträgers 28 und des hinteren Heckbodens 26 jeweilige, nicht dargestellte Radhäuser für die hinteren Fahrzeugräder nach innen hin.

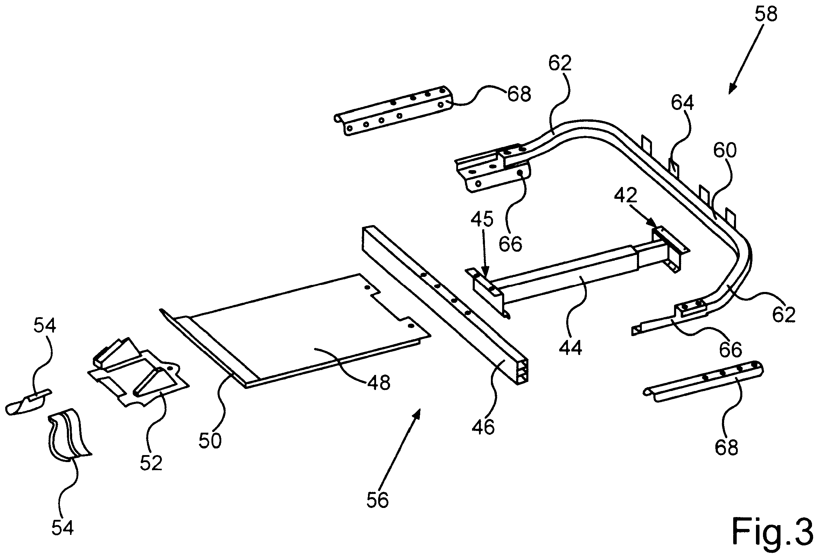

Wie nun insbesondere in Zusammenschau mit Fig. 3 erkennbar ist, ist im Hinterwagenbereich 10 der Personenkraftwagenkarosserie eine Schutzeinrichtung 40 vorgesehen, welche in Fig. 3 in einer perspektivischen Explosionsdarstellung deren wesentliche Bauelemente zeigt.

Diese Schutzeinrichtung 40 umfasst zunächst ein hinteres, äußeres Stützelement 42, welches vorliegend als Winkelstück gestaltet ist und welches im vorliegenden Fall am Querträger 14 der Abschlusswand 16 angeordnet ist. Dieses Stützelement 42 ist im vorliegenden Fall Teil eines in Fahrzeuglängsrichtung verlaufenden Stützelements in Form einer Strebe 44, welche nach vorne hin über ein als Winkelstück gestaltetes, vorderes inneres Stützelement 45 mit einer Querstrebe 46 verbunden ist. Die Strebe 44 ist bei diesem Ausführungsbeispiel der Karosserie zentral angeordnet und fluchtet mit einer Achse, welche parallel zur Fahrzeuglängsachse auf Höhe Y=0 angeordnet ist. Dabei definiert Y=0 die Fahrzeugmitte in Fahrzeugquerrichtung (y-Richtung). An diese Querstrebe 46 schließt sich nach vorne hin ein Plattenelement 48 an, welches - wie dies aus den Figuren 1 und 2 erkennbar ist - im Wesentlichen über die gesamte Länge des hinteren Heckbodens 26 verläuft. Dabei ist die in Fahrzeugquerrichtung gemessene Breite des Plattenelements 48 deutlich größer als die Breite der Strebe 44, aber ein Stück weit kleiner als der Abstand zwischen den Längsträgern 12 auf Höhe des Heckbodens 26. Die Strebe 44 ist mit der Querstrebe 46 verbunden, beispielsweise lösbar mittels Schraubverbindungen oder alternativ kraft-, form- und/oder stoffschlüssig, während das Plattenelement 48 seinerseits mit der Querstrebe 46 verbunden ist, vorzugsweise ebenfalls mittels lösbarer Verbindungselemente oder alternativ kraft-, form- und/oder stoffschlüssig.

Aus den Figuren 2 und 3 geht ohne weiteres hervor, dass die Querstrebe 46, welche die Strebe 44 mit dem Plattenelement 48 verbindet, am hinteren Ende des Querträgers 24 verläuft. Um trotz fluchtender Anordnung zwischen Strebe 44 beziehungsweise dessen Stützelement 45 mit dem Plattenelement 48, welche sich in Fahrzeughochrichtung (z-Richtung) auf etwa gleicher Höhe befinden, einen spalt- und stufenfreien Übergang zwischen diesen Teilen der Abstützanordnung zu schaffen, weist das Plattenelement 48 einen randseitig offenen Ausschnitt an, in welchen das in Form und Größe daran angepasste Stützelement 45 eingreift.

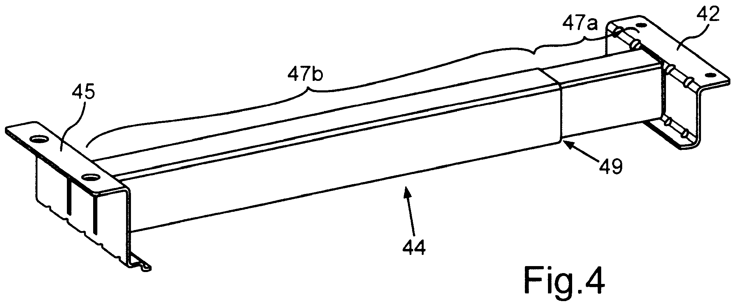

Aus Figur 4 geht eine perspektivische Darstellung der zentralen Strebe 44 mit den endseitig angeordneten, als Winkelelemente ausgebildeten Stützelementen 42 und 45 hervor. Zu erkennen ist, dass die balkenförmige Strebe 44 einen länglichen Grundkörper mit einem im Wesentlichen rechteckförmigen Querschnitt aufweist, der in seinem dem äußeren Stützelement 42 nahen Endbereich einen ersten Längsabschnitt 47a mit reduziertem Außenabmaßen aufweist. Der weitaus längere übrige, zweite Längsabschnitt 47b schließt sich an den ersten Längsabschnitt 47a an und weist größere Abmaße als der erste Längsabschnitt 47a auf. Der erste Längsabschnitt 47a ist so ausgebildet, dass ein deformierbarer Bereich gebildet ist, der bei einem Anprall eines Kollisionspartners sich gezielt energieabsorbierend deformieren soll, ähnlich bekannter Crashboxen, um die auf die Fahrzeuginsassen wirkenden Belastungen zu reduzieren. Der zweite Längsabschnitt 47b der Strebe 44 ist demgegenüber als starrer Balken ausgebildet, der die Anprallkräfte in gewünschter Weise nach vorne in den Mitteltunnel durch- beziehungsweise weiterleiten soll, worauf im Folgenden noch näher eingegangen wird.

Festzuhalten bleibt, dass auch das Plattenelement 48, analog zum zweiten Längsabschnitt 47b der Strebe 44, als starrer Balken beziehungsweise starres Flächenelement ausgebildet ist, der beziehungsweise das die Anprallkräfte in gewünschter Weise nach vorne in den Mitteltunnel durch- beziehungsweise weiterleiten soll und auch kann, ohne dabei die strukturelle Integrität der Karosserie in diesem Bereich zu gefährden.

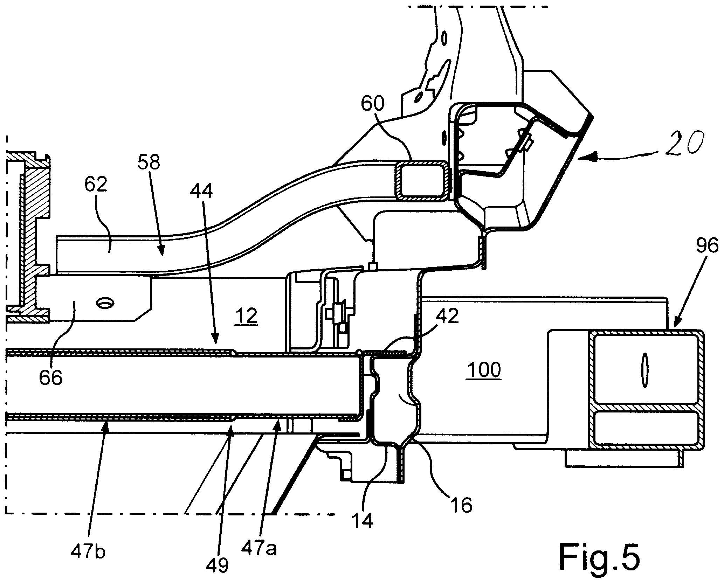

Aus Figur 5, welche einen Längsschnitt durch den Heckwagenbereich auf Höhe Y=0, das heißt entlang der Fahrzeuglängsachse, zeigt, ist der Aufbau der zentralen Strebe 44 ersichtlich. Diese umfasst zwei rohrförmige, jeweils einen im Wesentlichen rechteckförmigen Querschnitt aufweisende Hohlzylinder, von denen der den Längsabschnitt 47a bildende Hohlzylinder in den durchmessergrößeren, den Längsabschnitt 47b bildenden Hohlzylinder eingesteckt ist, wodurch im Bereich des Längsabschnitts 47b praktisch eine doppelte Wandung mit der damit einhergehenden Verstärkungswirkung gebildet ist. Die beiden Hohlzylinder sind bei diesem Ausführungsbeispiel in ihrem Übergangsbereich 49 miteinander verbunden, beispielsweise verschweißt. Die Hohlzylinder können material- und/oder wanddickengleich ausgebildet sein. Wichtig ist nur, dass diese so ausgebildet und miteinander verbunden sind, dass die unterschiedlich steifen Längsabschnitte 47a, 47b in gewünschter Weise gebildet sind. Zu erkennen ist ferner, dass die endseitig dieser Längsabschnitte 47a, 47b die Stützelemente 42 und 45 angesetzt und daran befestigt, beispielsweise angeschweißt sind.

Das Plattenelement 48 stützt sich nach vorne hin über einen Flansch 50 am Querträger 28 ab. Das Plattenelement 48 ist des Weiteren mit einem Krafteinleitungselement 52 verbunden, welches - wie dies insbesondere aus Fig. 1 erkennbar ist - den Querträger 28 überbrückt und das Plattenelement 48 mit dem Heckboden-unter-Fondsitz 29 verbindet. Des Weiteren umfasst die Stützeinrichtung 40 jeweilige weitere Krafteinleitungselemente 54, welche - wie dies aus Fig. 1 erkennbar ist - den Heckboden-unter-Fondsitz 29 mit dem Querträger 30 verbinden beziehungsweise an diesem abstützen. Zudem sorgen diese Krafteinleitungselemente 54 für eine entsprechende Weiterleitung jeweiliger Kräfte auf das nicht erkennbare vordere Mitteltunnelstrukturteil, welches im Bereich des ebenfalls nicht erkennbaren Hauptbodens vor dem Querträger 30 angeordnet ist.

Insgesamt ist somit erkennbar, dass die Strebe 44, die Querstrebe 46, das Plattenelement 48 sowie die Krafteinleitungselemente 52, 54 eine Stützanordnung 56 bilden, über welche im vorliegenden Fall das am äußeren der Personenkraftwagenkarosserie angeordnete Strukturelement in Form des Querträgers 14 unter Ausbildung eines zusätzlichen, zentralen Lastpfades L auf Höhe der hinteren Längsträger 12 nach vorne hin abgestützt ist.

Ergänzend zur vorliegenden Schutzeinrichtung 40 ist auch ein U-förmiges Stützelement 58 vorgesehen, welches ein im Bereich des hinteren Strukturelements in Form des Querträgers 14 und oberhalb desselben verlaufendes Querelement 60 und jeweilige, im Bereich der entsprechenden Hauptlängsträger 12 verlaufende Schenkel 62 umfasst. An dem Querträger 20 ist das Stützelement 58 über jeweilige Laschen 64 angebunden und zusätzlich über die gesamte Länge abgestützt. Die Schenkel 62 sind über jeweilige Winkelelemente 66 sowie zugehörige Leistenelemente 68 an den jeweiligen Längsträgern 12 angebunden.

Wie insbesondere aus den Figuren 3, 5 und 6 ersichtlich, weisen die Schenkel 62 des Stützelements 58 jeweils eine Kröpfung auf, derart, dass bei an der Fahrzeugkarosserie montiertem Stützelement 58 dessen Querelement 60 in einem vertikalen Abstand oberhalb, bei dem in den Figuren dargestellten Ausführungsbeispiel oberhalb des Querträgers 14 angeordnet ist, während die beiden Schenkel 62 von oben auf den jeweiligen Längsträger 12 aufgesetzt und darin fixiert sind. Diese abgekröpfte Bauweise des U-förmigen Stützelement 58 ermöglicht es, das Querelement 60 in Fahrzeughochrichtung (z-Richtung) in etwa auf Höhe einer in Figur 6 dargestellten Energiespeichereinrichtung 110, welche beispielsweise als Hochvoltbatterie 112 ausgebildet sein kann, anzuordnen. Die hier als quaderförmiger Block ausgebildete Hochvoltbatterie 112 ist vollständig in der in Figur 6 angedeuteten Schutzzone S angeordnet und zwar in einem Bauraumbereich 114, welcher oberhalb des mittels der Schutzeinrichtung 40 realisierten beziehungsweise realisierbaren Lastpfades L vorgesehen ist. Die Hochvoltbatterie 112 befindet sich also oberhalb der Strebe 44 und des Plattenelements 48, so dass im Falle eines heckseitigen Aufpralls die Unfallkräfte über den Lastpfad L unterhalb der Hochvoltbatterie 112 in den Mitteltunnel weitergeleitet werden. Eine Beschädigung der Hochvoltbatterie 112 kann so sicher vermieden werden, da mittels der Schutzreinrichtung 40 der die Hochvoltbatterie 112 aufnehmende Bauraumbereich 114 in Bezug auf Deformationen quasi überbrückt wird. Für einen zusätzlichen Schutz sorgt auch das besonders steif und starr ausgebildete, bügelförmige Stützelement 58, dessen Querelement 60 -in Fahrzeuglängsrichtung gesehen- auf gleicher Höhe und in fluchtender Anordnung mit der Hochvoltbatterie 112 angeordnet ist und so im Falle einer durch einen Aufprall bedingten Deformation des Heckwagens und/oder eines Eindringens eines Teils des Anprallpartners standhält und so die Hochvoltbatterie 112 vor Beschädigungen schützt. Die möglicherweise auf das Querelement 60 wirkenden Anprallkräfte werden über die Schenkel 62 ebenfalls in die Hauptlängsträger 12 durch- beziehungsweise weitergeleitet.

Wie des Weiteren aus Fig. 1 erkennbar ist, ist das im Bereich einer im Weiteren noch näher erläuterten Deformationszone D angeordnete Strukturelement der Personenkraftwagenkarosserie in Form des Querträgers 14 unter Vermittlung der Stützanordnung 56 unter Ausbildung des zusätzlichen Lastpfades L an jeweiligen, im Bereich einer Schutzzone S der Personenkraftwagenkarosserie angeordneten Karosseriestrukturteilen, insbesondere den Mitteltunnelstrukturteilen 34 beziehungsweise Querträgern 24 und 28 sowie Längsträgern 12 im Bereich einer Schutzzone S abgestützt. Durch die Stützanordnung 56 bildet sich dabei ein mit Pfeilen 90 angedeuteter Lastpfad in der Fahrzeugmitte und in Fahrzeuglängsrichtung verlaufend zwischen den beiden durch die Hauptlängsträger 12 gebildeten Lastpfade aus, wenn der Hinterwagenbereich 10 -wie im vorliegenden Fall angedeutet -durch eine Barriere 92 mit entsprechenden Unfallkräften 94 beaufschlagt wird. Diese Unfallkräfte 94 werden zunächst beim Auftreffen der Barriere 92 über einen hinteren Stoßfängerquerträger 96, welcher Teil einer Stoßfängeranordnung ist, in die jeweiligen Hauptlängsträger 12 eingeleitet, wie dies durch die Pfeile 98 erkennbar ist. Der Stoßfängerquerträger 96 ist dabei beispielsweise unter Vermittlung jeweiliger Energieabsorptionselemente 100 an rückwärtigen Enden der jeweiligen Hauptlängsträger 12 abgestützt.

In bevorzugter Ausführungsform ist die Karosserie so ausgebildet, dass erst nachdem die auch als Crashboxen bezeichneten Energieabsorptionselemente 100 auf Block deformiert sind, sich also in Fahrzeuglängsrichtung nicht weiter energieabsorbierend verformen lassen, und auch der Stoßfängerquerträger 96 entsprechend verformt ist, sich dann im weiteren Verlauf des Unfallszenarios eine zusätzliche Ausbildung des Lastpfads L ergibt, wenn die Stützanordnung 56 mit Unfallkräften beaufschlagt wird. Die Stützanordnung 56 sorgt dabei zum einen für eine Lastverteilung gemäß den Pfeilen 102 in Richtung zur Fahrzeugaußenseite beziehungsweise -in Richtung der jeweiligen Hauptlängsträger 12, und zum anderen zur Verteilung der Kräfte unter Ausbildung des Lastpfades L gemäß den Pfeilen 90 in Fahrzeuglängsrichtung nach vorne auf die jeweiligen Strukturbauteile in der Schutzzone S, insbesondere auf die jeweiligen Mitteltunnelstrukturteile 34, von welchen das hintere Mitteltunnelstrukturteil 34 erkennbar ist. Über dieses erfolgt dann im Weiteren die Krafteinleitung in das nicht erkennbare vordere Mitteltunnelstrukturteil, welches im Bereich des Hauptbodens nach vorne verläuft. Die gemäß den Pfeilen 98 in die Hauptlängsträger 12 eingeleiteten Kräfte werden nach vorne hin über die Seitenschweller 38 weitergeleitet.

Durch die Schutzeinrichtung 40 wird somit ein zusätzlicher Lastpfad L zwischen dem hinteren Stoßfängerquerträger 96 und dem lediglich in Figur 6 abschnittsweise erkennbaren Mitteltunnel 35 gebildet wird, erschlossen, wobei sich dieser Lastpfad L zwischen den jeweiligen Hauptlängsträgern 12 beziehungsweise Seitenschwellern 36 erstreckt. Dadurch ergibt sich eine deutliche Reduzierung der Kräfte auf die Hauptlängsträger 12 und eine damit einhergehende Entlastung, wodurch sich ein Erhalt der Strukturintegrität im Heckwagenbereich 10 und eine gezielte Deformation im Hauptdeformationsbereich, nämlich der Deformationszone D, ergibt. Hierdurch wird die Belastung in einem Bauraumbereich, in welchem üblicherweise die Hochvoltbatterie angeordnet ist, deutlich reduziert, sodass die Gefahr von übermäßigen Deformationen der Karosserie und Beschädigungen entsprechender Bauelemente in diesem Bauraumbereich der Personenkraftwagenkarosserie deutlich reduziert ist. Die jeweiligen Batterien oder dergleichen Bauelemente können dabei beispielsweise im Bereich der Schutzzone S oder aber auch im Bereich der Deformationszone D, zumindest in einem vorderen Bereich der Deformationszone D, angeordnet sein.

Die Schutzeinrichtung 40 kann dabei in einfacher Weise an eine bereits als Ecktyp gebildete Personenkraftwagenkarosserie montiert werden. Somit ergibt sich eine geringe Ecktypbelastung hinsichtlich Kosten und Gewicht und eine einfache Montagelösung.

Bei einem in den Figuren nicht dargestellten Ausführungsbeispiel ist im Unterschied zu der vorstehend beschriebenen Schutzeinrichtung 40 die Querstrebe 46 nicht mit den Hauptlängsträgern 12 verbunden, so dass über diese Querstrebe 46 kein Lastpfad hin zu den Hauptlängsträgern 12 aufgebaut wird. In diesem Fall dient die Querstrebe 46 quasi als Lastverteiler der über die in Fahrzeuglängsrichtung ausgerichtete Strebe 44 übertragenen Kräfte hin zum Plattenelement 48.

Unabhängig davon, ob die Querstrebe 46 an den Hauptlängsträgern 12 befestigt ist oder nicht, kann anstelle des flächigen Plattenelements 48 auch mindestens eine Längsstrebe oder mehrere, in Querrichtung des Kraftwagens in einem Abstand voneinander angeordnete Längsstreben vorgesehen sein, um die über die Querstrebe 46 übertragenen Kräfte nach vorne in den Querträger 28 weiterzuleiten.

## Patentansprüche

1. Karosserie für einen Personenkraftwagen, mit zwei sich bis in einen Hinterwagenbereich (10) erstreckenden Hauptlängsträgern (12), die über wenigstens einen Stoßfängerquerträger (96) miteinander verbunden sind, und mit einer sich zwischen den beiden Hauptlängsträgern (12) erstreckenden Stützanordnung (56), welche bei einer kollisionsbedingten Kraftbeaufschlagung zur Ausbildung eines zusätzlichen Lastpfads (L) an einem in einer Schutzzone (S) der Personenkraftwagenkarosserie vorgesehenen Mitteltunnel (35) abgestützt ist, wobei oberhalb und/oder unterhalb der Stützanordnung (56) ein Bauraumbereich (114) zur Unterbringung wenigstens eines schutzbedürftigen Bauteils oder Aggregats vorgesehen ist, und wobei die Stützanordnung (56) eine im Bereich der Fahrzeugmitte zwischen den Hauptlängsträgern (12) erstreckende Strebe (44) umfasst, welche als eine bei einer kollisionsbedingten Kraftbeaufschlagung die Anprallkräfte nach vorne zum Mitteltunnel (35) durch- beziehungsweise weiterleitende Schutzeinrichtung (40) ausgebildet ist,
**dadurch gekennzeichnet, dass**
die Strebe (44) einen ersten, bei einem Anprall eines Kollisionspartners gezielt energieabsorbierend deformierbaren Längsabschnitt (47a) und einen zweiten, beim Anprall eines Kollisionspartners sich als starrer Balken verhaltenden, die Anprallkräfte durch- beziehungsweise weiterleitenden Längsabschnitt (47b) aufweist.

2. Karosserie nach Anspruch 1,
**dadurch gekennzeichnet, dass** zumindest der erste Längsabschnitt (47a) der Strebe (44) im Bereich einer Deformationszone (D) angeordnet ist.

3. Karosserie nach Anspruch 1 oder 2,
**dadurch gekennzeichnet, dass**
die Stützanordnung (56) im Bereich der Schutzzone (S) ein Plattenelement (48) und/oder mindestens eine Strebe umfasst, welches beziehungsweise welche so starr und steif ausgebildet ist, dass es bei einer kollisionsbedingten Kraftbeaufschlagung den Anprallkräften standhält und diese zum Mitteltunnel (35) weiterleitet.

4. Karosserie nach einem der vorhergehenden Ansprüche,
**dadurch gekennzeichnet, dass**
die Stützanordnung (56) jeweilige Krafteinleitungselemente (52, 54) aufweist, über welche eine Unfallkraft in einen Heckboden, insbesondere einem Heckboden-unter-Fondsitz (29), in einen Querträger (30) und/oder den Mitteltunnel (35) einleitbar ist.

5. Karosserie nach einem der vorhergehenden Ansprüche 1 bis 4,
**dadurch gekennzeichnet, dass**
ein U-förmiges Stützelement (58) vorgesehen ist, welches im Bereich eines hinteren Strukturelements (14) am äußeren Ende der Deformationszone (D) sowie im Bereich der jeweiligen Hauptlängsträger (12) verläuft und -in Fahrzeuglängsrichtung gesehen- zumindest abschnittsweise in Überdeckung mit dem oberhalb des Lastpfades (L) angeordneten Bauraumbereich (114) zur Aufnahme des wenigstens einen schutzbedürftigen Bauteils oder Aggregats angeordnet ist.

6. Karosserie nach Anspruch 5,
**dadurch gekennzeichnet, dass**
das U-förmige Stützelement (58) ein auf Höhe und in Überdeckung mit dem Bauraumbereich (114) angeordnetes Querelement (60) und im Bereich der Hauptlängsträger (12) verlaufende und an dem jeweiligen Hauptlängsträger (12) angebundene Schenkel (62) aufweist.

7. Karosserie nach Anspruch 6,
**dadurch gekennzeichnet, dass**
das Querelement (60) -in Fahrzeuglängsrichtung gesehen- auf Höhe eines eine Ladekante (18) für einen Kofferraum bildenden Querträgers (20) angeordnet ist.

## Claims

1. Body for a passenger car, comprising two main longitudinal members (12) which extend into a rear vehicle region (10) and are connected to one another via at least one bumper cross-member (96), and comprising a support arrangement (56) which extends between the two main longitudinal members (12) and is supported, in the event of collision-related application of force, to form an additional load path (L) on a center tunnel (35) provided in a protective zone (S) of the passenger car body, an installation space region (114) being provided above and/or below the support arrangement (56) for accommodating at least one component or assembly in need of protection, and the support arrangement (56) comprising a strut (44) which extends in the region of the vehicle center between the main longitudinal members (12) and is designed as a protective device (40) which passes or forwards the impact forces forward to the center tunnel (35) in the event of collision-related force application,
**characterized in that**
the strut (44) has a first longitudinal portion (47a) which can be specifically deformed in an energy-absorbing manner in the event of an impact with a collision partner, and a second longitudinal portion (47b) which behaves as a rigid beam in the event of impact with a collision partner and passes or forwards the impact forces.

2. Body according to claim 1,
**characterized in that** at least the first longitudinal portion (47a) of the strut (44) is arranged in the region of a deformation zone (D).

3. Body according to either claim 1 or claim 2,
**characterized in that**
the support arrangement (56) comprises a plate element (48) and/or at least one strut in the region of the protection zone (S), which plate element or strut is designed to be rigid and stiff such that it withstands the impact forces during collision-related force application and forwards them to the center tunnel (35).

4. Body according to any of the preceding claims,
**characterized in that**
the support arrangement (56) has corresponding force introduction elements (52, 54) via which an accident force can be introduced into a rear floor, in particular a rear floor under the rear seat (29), into a cross-member (30) and/or the center tunnel (35).

5. Body according to any of the preceding claims 1 to 4,
**characterized in that**
a U-shaped support element (58) is provided, which extends in the region of a rear structural element (14) at the outer end of the deformation zone (D) and in the region of the corresponding main longitudinal members (12) and is arranged, at least in portions, overlapping the installation space region (114) arranged above the load path (L) for receiving the at least one component or assembly in need of protection, when viewed in the longitudinal direction of the vehicle.

6. Body according to claim 5,
**characterized in that**
the U-shaped support element (58) has a transverse element (60) which is arranged at a height of and overlapping the installation space region (114) and legs (62) which extend in the region of the main longitudinal members (12) and are attached to the corresponding main longitudinal member (12).

7. Body according to claim 6,
**characterized in that**
the transverse element (60) is arranged at the level of a cross-member (20) which forms a loading edge (18) for a trunk when viewed in the longitudinal direction of the vehicle.

## Revendications

1. Carrosserie pour un véhicule de tourisme, comportant deux longerons principaux (12) s'étendant jusque dans une région arrière du véhicule (10), lesquels longerons principaux sont reliés entre eux par l'intermédiaire d'au moins une traverse de pare-chocs (96), et comportant un ensemble support (56) s'étendant entre les deux longerons principaux (12), lequel ensemble support s'appuie sur un tunnel central (35) prévu dans une zone de protection (S) de la carrosserie du véhicule de tourisme lors d'une sollicitation de force induite par une collision pour la formation d'un chemin de charge (L) supplémentaire, dans laquelle, au-dessus et/ou en dessous de l'ensemble support (56), il est prévu un espace d'encombrement (114) destiné à accueillir au moins un composant ou un agrégat sensible, et dans laquelle l'ensemble support (56) comprend une entretoise (44) s'étendant dans la région du centre du véhicule entre les longerons principaux (12), laquelle entretoise est réalisée comme un dispositif de protection (40) faisant passer ou transmettant les forces d'impact vers l'avant du tunnel central (35) lors d'une sollicitation de force induite par une collision,
**caractérisée en ce que**
l'entretoise (44) présente une section longitudinale (47a) déformable de manière ciblée en absorbant l'énergie lors d'un impact d'un partenaire de collision et une seconde section longitudinale (47b) se comportant comme une poutre rigide lors de l'impact d'un partenaire de collision et faisant passer ou transmettant les forces d'impact.

2. Carrosserie selon la revendication 1,
**caractérisée en ce qu'**au moins la première section longitudinale (47a) de l'entretoise (44) est disposée dans la région d'une zone de déformation (D).

3. Carrosserie selon la revendication 1 ou 2,
**caractérisée en ce que**
l'ensemble support (56) comprend un élément de panneau (48) et/ou au moins une entretoise dans la région de la zone de protection (S), lequel ou laquelle est réalise(e) rigide et raide de sorte qu'il/elle résiste aux forces d'impact lors d'une sollicitation de force induite par la collision et transmet ces forces au tunnel central (35).

4. Carrosserie selon l'une des revendications précédentes,
**caractérisée en ce que**
l'ensemble support (56) présente des éléments de transmission de force (52, 54) respectifs par l'intermédiaire desquels une force produite lors d'un accident peut être introduite dans un plancher arrière, en particulier un plancher arrière sous siège arrière (29), dans une traverse (30) et/ou le tunnel central (35).

5. Carrosserie selon l'une des revendications précédentes 1 à 4, **caractérisée en ce que**
il est prévu un élément de support (58) en forme de U, lequel s'étend dans la région d'un élément de structure (14) arrière à l'extrémité extérieure de la zone de déformation (D) ainsi que dans la région du longeron principal respectif (12) et, vu dans la direction longitudinale du véhicule, est disposé au moins partiellement en chevauchement avec l'espace d'encombrement (114) disposé au-dessus du chemin de charge (L), pour la réception de l'au moins un composant ou agrégat sensible.

6. Carrosserie selon la revendication 5,
**caractérisée en ce que**
l'élément de support (58) en forme de U présente un élément transversal (60) disposé à la hauteur de et en chevauchement avec l'espace d'encombrement (114) et présente un bras (62) s'étendant dans la région du longeron principal (12) et relié au longeron principal respectif (12).

7. Carrosserie selon la revendication 6,
**caractérisée en ce que**
l'élément transversal (60), vu dans la direction longitudinale du véhicule, est disposé à la hauteur d'une traverse (20) formant un seuil de chargement (18) pour un coffre.
